# EUROPÄISCHE PATENTSCHRIFT

(11) **EP 1 315 680 B1**
(45) Veröffentlichungstag und Bekanntmachung des Hinweises auf die Patenterteilung: **08.12.2004**
(21) Anmeldenummer: 01969262.3
(22) Anmeldetag: 31.08.2001
(51) Int. Cl.: C03C 14/00, C03C 8/14

(54) **GLASKERAMIKMASSE UND VERWENDUNG DER GLASKERAMIKMASSE**
GLASS CERAMIC MASS AND USE THEREOF
COMPOSITE A MATRICE VITROCERAMIQUE ET SON UTILISATION

(30) Priorität: 01.09.2000 DE 10043196
(43) Veröffentlichungstag der Anmeldung: 04.06.2003
(73) Patentinhaber: W.C. Heraeus GmbH & Co. KG, 63450 Hanau (DE); BUNDESANSTALT FÜR MATERIALFORSCHUNG UND -PRUFUNG (BAM), D-12205 Berlin (DE)
(72) Erfinder: SCHILLER, Wolfang, Arno, 12557 Berlin (DE); GEMEINERT, Marion, 12683 Berlin (DE); FRITZ, Ulrich, 13156 Berlin (DE); EBERSTEIN, Markus, 10779 Berlin (DE); PREU, Gabriele, 81667 München (DE); WERSING, Wolfram, 83346 Bergen (DE); DERNOVSEK, Oliver, 81669 München (DE); MODES, Christina, 60439 Frankfurt (DE)
(74) Vertreter: Kühn, Hans-Christian
(86) Internationale Anmeldenummer: PCT/DE2001/003340
(87) Internationale Veröffentlichungsnummer: WO 2002/032824

(56) Entgegenhaltungen:
- EP-A- 0 577 067
- DE-A- 10 003 264
- JP-A- 8 073 239
- US-A- 4 447 855
- US-A- 5 264 403
- DERNOVSEK O ET AL: "LTCC glass-ceramic composites for microwave application" ELECTROCERAMICS VII'00, PORTOROZ, SLOVENIA, 3-6 SEPT. 2000, Bd. 21, Nr. 10-11, Seiten 1693-1697, XP004301752 Journal of the European Ceramic Society, 2001, Elsevier, UK ISSN: 0955-2219

## Beschreibung

Die Erfindung betrifft eine Glaskeramikmasse mit mindestens einer Oxidkeramik, die Barium, Titan und mindestens ein Seltenerdmetall Rek aufweist, und mindestens einem Glasmaterial, das mindestens ein Oxid mit Bor, mindestens ein Oxid mit Silizium und mindestens ein Oxid mit mindestens einem zweiwertigen Metall Me2+ aufweist. Neben der Glaskeramikmasse wird eine Verwendung der Glaskeramikmasse angegeben.

Eine Glaskeramikmasse der genannten Art ist aus US 5 264 403 bekannt. Die Oxidkeramik der bekannten Glaskeramikmasse wird aus Bariumoxid (BaO), Titandioxid (TiO₂), einem Trioxid eines Seltenerdmetalls (Rek₂O₃) und eventuell Bismuttrioxid (Bi₂O₃) herstellt. Das Seltenerdmetall Rek ist beispielsweise Neodym. Das Glasmaterial der Glaskeramikmasse besteht aus Bortrioxid (B₂O₃), Siliziumdioxid und Zinkoxid (ZnO). Ein Keramikanteil der Oxidkeramik an der Glaskeramikmasse beträgt beispielsweise 90% und ein Glasanteil des Glasmaterials 10 %.

EP-A-577 067 beschreibt eine Glaskeramikmasse und ein Keramikkörper, mit einer BaNdTi₄O₁₂ - Oxidkeramik und einem Glas das Oxiden von Si, B, Al, La, und Bi und/oder Pb aufweist.

Ein Verdichten der Glaskeramikmasse findet bei einer Sintertemperatur von etwa 950°C statt. Damit eignet sich die Glaskeramikmasse zur Verwendung in der LTCC(low temperature cofired ceramics)- Technologie. Die LTCC-Technologie ist beispielsweise in D. L. Wilcox et al, Proc. 1997 ISAM, Philadelphia, Seiten 17 bis 23 beschrieben. Die LTCC-Technologie ist ein keramisches Mehrschichtverfahren, bei dem ein passives elektrisches Bauelement im Volumen eines keramischen Mehrschichtkörpers integriert werden kann. Das passive elektrische Bauelement ist beispielsweise eine elektrische Leiterbahn, eine Spule, eine Induktion oder ein Kondensator. Eine Integration gelingt beispielsweise dadurch, dass eine dem Bauelement entsprechende Metallstruktur auf einer oder mehreren keramischen Grünfolien aufgedruckt wird, die bedruckten keramischen Grünfolien übereinander zu einem Verbund gestapelt und der Verbund gesintert. Da keramische Grünfolien mit niedrig sinternder Glaskeramikmasse verwendet werden, kann niedrig schmelzendes, elektrisch hochleitfähiges elementares Metall Me0 wie Silber oder Kupfer im Verbund mit der keramischen Grünfolien gesintert werden. Dabei ist eine Funktionsfähigkeit des mit Hilfe der LTCC-Technolgie integrierten Bauelements entscheidend von einer dielektrischen Materialeigenschaft der verwendeten Glaskeramik abhängig. Eine derartige Materialeigenschaft ist beispielsweise die Permittivität (εᵣ), eine Güte (Q) und ein Temperaturgang der Frequenz (Tkf).

Bei der bekannten Glaskeramikmasse ist der Glasanteil relativ niedrig, so dass das Verdichten der Glaskeramikmasse durch reaktives Flüssigphasensintern erfolgt. Während des Sinterns bildet sich aus dem Glasmaterial eine flüssige Glasphase (Glasschmelze). Bei einer höheren Temperatur löst sich die Oxidkeramik in der Glasschmelze auf, bis eine Sättigungskonzentration erreicht ist und es zu einer Wiederausscheidung kommt. Durch ein Auflösen und Wiederausscheiden der Oxidkeramik kann sich die Zusammensetzung der Oxidkeramik und damit auch die der Glasphase beziehungsweise des Glasmaterials ändern. Beim Abkühlen kann es zusätzlich zu einer Kristallisation aus der Glasschmelze kommen. Beispielsweise verbleibt dabei ein Bestandteil der Oxidkeramik nach dem Abkühlen in der Glasphase. Wenn sich durch das Verdichten die Zusammensetzung der Oxidkeramik und die des Glasmaterials ändert, ist es schwierig, die Materialeigenschaften der verdichteten Glaskeramikmasse festzulegen und damit die Funktionsfähigkeit des mit Hilfe der LTCC-Technologie integrierte Bauelements zu gewährleisten.

Aufgabe der vorliegenden Erfindung ist es, eine Glaskeramikmasse mit einer Oxidkeramik anzugeben, deren Zusammensetzung während eines Sinterns im Wesentlichen gleich bleibt.

Zur Lösung der Aufgabe wird eine Glaskeramikmasse gemäß Anspruch 1.

Die Glaskeramikmasse ist eine glaskeramische Zusammensetzung und unabhängig vom ihrem Zustand. Die Glaskeramikmasse kann als keramischer Grünkörper vorliegen. Bei einem Grünkörper, beispielsweise einer Grünfolie, können ein Pulver der Oxidkeramik und ein Pulver des Glasmaterials mit Hilfe eines organischen Binders miteinander verbunden sein. Denkbar ist auch, dass die Glaskeramikmasse als Pulvermischung der Oxidkeramik und des Glasmaterials vorliegt. Darüber hinaus kann die Glaskeramikmasse als gesinterter Keramikkörper vorliegen. Beispielsweise besteht ein in einem Sinterprozess hergestellter keramischer Mehrschichtkörper aus der Glaskeramikmasse. Dieser keramische Mehrschichtkörper kann einem weiteren Sinterprozess zugeführt werden.

Die Oxidkeramik kann als einzige Phase vorliegen. Sie kann aber auch aus mehreren Phasen bestehen. Denkbar ist beispielsweise, dass die Oxidkeramik aus Phasen mit einer jeweils unterschiedlichen Zusammensetzung besteht. Die Oxidkeramik ist somit eine Mischung verschiedener Oxidkeramiken. Denkbar ist auch, dass eine oder mehrere Ausgangsverbindungen einer Oxidkeramik vorliegen, die während des Sinterns erst zur eigentlichen Oxidkeramik umgesetzt werden.

Das Glasmaterial kann ebenfalls eine einzige Phase sein. Beispielsweise ist die Phase eine Glasschmelze aus Bortrioxid, Siliziumdioxid, Zinkoxid und Bismuttrioxid. Denkbar ist auch, dass das Glasmaterial aus mehren Phasen besteht. Beispielsweise besteht das Glasmaterial aus einer Pulvermischung der angegebenen Oxide. Aus den Oxiden bildet sich während des Sinterns eine gemeinsame Glasschmelze. Denkbar ist auch, dass das Glasmaterial ein Kristallisationsprodukt der Glasschmelze ist. Dies bedeutet, dass das Glasmaterial beispielsweise nach dem Sintern nicht nur als Glasschmelze, sondern auch in kristalliner Form vorliegen kann.

Der grundlegende Gedanke der vorliegenden Erfindung besteht darin, ein Bismutoxid, insbesondere Bismuttrioxid, im Glasmaterial einzusetzen. Ein Vorteil besteht dabei darin, dass eine Erweichungstemperatur T_{soft} des Glasmaterials erniedrigt werden kann. Je niedriger der Glasübergangspunkt liegt, desto tiefer liegt die Sintertemperatur beziehungsweise eine Dichtbrandtemperatur der entsprechenden Glaskeramikmasse. Bei der Dichtbrandtemperatur kann ein nahezu vollständiges Verdichten der Glaskeramikmasse in kurzer Zeit erreicht werden.

Zudem beeinflusst Bismuttrioxid das Auflösen und Wiederabscheiden der Oxidkeramik in der Glasschmelze während des Sinterns in besonders günstiger Weise (beispielsweise durch die niedrigere Dichtbrandtemperatur). Es findet nahezu kein Herauslösen einzelner Bestandteile der Oxidkeramik statt. Die Zusammensetzung der Oxidkeramik ändert sich nicht oder nur geringfügig und kann deshalb sehr gut voreingestellt werden.

Es ist bekannt, dass Bismut, das in der Oxidkeramik vorhanden ist, bei einer erhöhten Temperatur mit elementarem Silber reagiert. Bei einem Einsatz einer bismuthaltigen Oxidkeramik in der LTCC-Technologie unter Verwendung von Silber als elektrisch leitfähiges Material kann es zu einer unerwünschten, die Funktionsfähigkeit des herzustellenden Bauelements beeinträchtigenden Reaktion kommen. Wenn Bismutrioxid im Glasmaterial enthalten ist, erniedrigt sich die Dichtbrandtemperatur. Ein Sintern kann bei niedrigern Temperaturen stattfinden. Somit wird eine Reaktion zwischen Bismut bzw. Bismuttrioxid und elementarem Silber unterdrückt. Wenn zudem der Glasanteil relativ niedrig ist, ist auch relativ wenig Bismut vorhanden, so dass eine merkliche Reaktion zwischen Bismut und Silber nicht stattfindet.

In einer besonderen Ausgestaltung weist die Oxidkeramik eine formale Zusammensetzung BaRek₂Ti₄O₁₂ auf. Die Oxidkeramik der genannten Zusammensetzung wird als Mikrowellenkeramik bezeichnet, da deren Materialeigenschaften (Permittivität, Güte, Tkf-Wert) sehr gut geeignet sind für einen Einsatz in der Mikrowellentechnik.

Insbesondere weist das Glasmaterial mindestens ein Oxid mit mindestens einem Seltenerdmetall Reg auf. Das Seltenerdmetall Reg liegt beispielsweise als Trioxid Reg₂O₃ vor. Mit dem Oxid des Seltenerdmetalls Reg kann die Permittivität des Glasmaterials, die zur Permittivität der gesamten Glaskeramikmasse beiträgt, an die Permittivität der Oxidkeramik angepasst werden. Damit ist eine Glaskeramikmasse zugänglich, die eine Permittivität von 20 bis 80 oder noch höher aufweist.

Insbesondere sind das Seltenerdmetall Rek und/oder das Seltenerdmetall Reg aus der Gruppe Lanthan und/oder Neodym und/oder Samarium ausgewählt. Denkbar sind auch andere Lantanide oder auch Actinide. Die Seltenerdmetalle Rek und Reg können identisch sein, es können aber auch verschieden Seltenerdmetalle sein.

In einer besonderen Ausgestaltung weist die Oxidkeramik das zweiwertige Metall Me2+ auf. Insbesondere ist das zweiwertige Metall Me2+ aus der Gruppe Beryllium, Magnesium, Calcium, Strontium, Barium, Kupfer und/oder Zink ausgewählt. Das zweiwertige Metall Me2+ kann als eigene oxidische Phase vorliegen. Insbesondere ist das zweiwertige Metall Me2+ eine Dotierung der Oxidkeramik. In der Oxidkeramik bewirkt das zweiwertige Metall Me2+ eine wesentliche Absenkung der Sintertemperatur der Oxidkeramik. Zudem können die dielektrischen Materialeigenschaften der Oxidkeramik gesteuert werden. Beispielsweise ist die Oxidkeramik der Zusammensetzung BaRek₂Ti₄O₁₂ mit Zink dotiert. Das zweiwertige Metall Me2+ kann wie das Oxid des Bismuts eine Unterdrückung des Herauslösens einzelner Bestandteile der Oxidkeramik während des Sinterns bewirken. Es hat sich gezeigt, dass es besonders günstig ist, wenn die Oxidkeramik mit dem zweiwertigen Metall Me2+ dotiert ist, das auch im Glasmaterial vorkommt. Insbesondere ist hier Zink als zweiwertiges Metall Me2+ zu erwähnen. Zink hat einen besonders günstigen Einfluss auf das reaktive Flüssigphasensintern und einen dabei auftretenden Auflösungsund Wiederabscheidungsprozess.

In einer weiteren Ausgestaltung weist das Glasmaterial neben dem Oxid des Siliziums als vierwertiges Metall mindestens ein Oxid mindestens eines weiteren vierwertigen Metalls Me4+ auf. Neben dem Siliziumdioxid verfügt das Glasmaterial über mindestens ein weiteres Dioxid eines vierwertigen Metalls. Das weitere vierwertige Metall Me4+ ist insbesondere aus der Gruppe Germanium und/oder Zinn und/oder Titan und/oder Zirkonium ausgewählt. Neben Siliziumdioxid unterstützen die Oxide der genannten vierwertigen Metalle eine Glasigkeit des Glasmaterials. Dies bedeutet, dass mit Hilfe dieser Oxide, wie im Übrigen auch mit den Oxiden der oben genannten zweiwertigen Metalle Me2+, eine Viskositäts-Temperatur-Charakteristik des Glasmaterials gesteuert wird. Beispielsweise lässt sich die Erweichungstemperatur T_{soft} des Glasmaterials einstellen. Ebenso kann eine Kristallisation des Glasmaterials beeinflusst werden.

In einer besonderen Ausgestaltung setzen sich 100 vol% der Glaskeramikmasse zusammen aus einem Keramikanteil der Oxidkeramik, der ausgewählt ist aus dem Bereich zwischen einschließlich 70 vol% bis einschließlich 95 vol%, und einem Glasanteil des Glasmaterials, der ausgewählt ist aus dem Bereich zwischen einschließlich 30 vol% bis einschließlich 5 vol%. Wenn die Glaskeramikmasse einem Sintern unterzogen wird, findet das oben erwähnte reaktive Flüssigphasensintern statt. Bei besonders günstigen Auflösungs- und Wiederausscheideverhalten, wie es insbesondere dann vorliegt, wenn das zweiwertige Metall in der Oxidkeramik und in dem Glasmaterial vorkommt, ist es möglich, den Glasanteil auch unter 5 vol% halten.

Insbesondere weisen die Oxidkeramik und/oder das Glasmaterial ein Pulver mit einer mittleren Partikelgröße (D₅₀-Wert) auf, die aus dem Bereich zwischen einschließlich 0,1 µm und einschließlich 1,5 µm ausgewählt ist. Die mittlere Partikelgröße wird auch als Halbwertspartikelgröße bezeichnet. Zum Einhalten eines sehr geringen Glasanteils ohne Einschränkung bezüglich des Auflösungs- und Wiederausscheideverhaltens sind Pulver mit den angegebenen Partikelgrößen von besonderem Vorteil. Die Pulver verfügen über eine große für das reaktive Flüssigphasensintern notwendige reaktive Oberfläche.

Üblicherweise wird zur Erniedrigung der Sintertemperatur und zur Erhöhung der Permittivität der Glaskeramikmasse dem Glasmaterial Bleioxid (PbO) zugegeben. Mit der vorliegenden Erfindung beträgt ein Bleioxidanteil und/oder ein Cadmiumoxidanteil an der Glaskeramikmasse und/oder der Oxidkeramik und/oder dem Glasmaterial maximal 0,1 %, insbesondere maximal 1 ppm. Vorzugsweise ist aus Umweltgesichtspunkten der Anteil von Bleioxid und Cadmiumoxid nahezu Null. Mit der vorliegenden Erfindung gelingt dies ohne wesentliche Einschränkung der Materialeigenschaften der Glaskeramikmasse.

In einer besonderen Ausgestaltung weist die Keramikmasse eine Dichtbrandtemperatur von maximal 950°C und insbesondere von maximal 910°C oder 890°C auf. Insbesondere ist dabei eine Glaskeramikmasse zugänglich mit einer Permittivität, die aus dem Bereich von einschließlich 20 bis einschließlich 80 ausgewählt ist, einer Güte, die aus dem Bereich von einschließlich 800 bis einschließlich 5000 ausgewählt ist, und einem Tkf-Wert, der aus dem Bereich von einschließlich - 20 ppm/K bis einschließlich + 20 ppm/K ausgewählt ist. Die Glaskeramikmasse ist mit diesen Materialeigenschaften hervorragend für den Einsatz in der Mikrowellentechnik geeignet.

Gemäß einem zweiten Aspekt der Erfindung wird ein Keramikkörper mit einer zuvor beschriebenen Glaskeramikmasse angegeben. Insbesondere weist der Keramikkörper mindestens ein elementares Metall Me0 auf, das aus der Gruppe Gold und/oder Silber und/oder Kupfer ausgewählt ist. Vorzugsweise ist der Keramikkörper ein keramischer Mehrschichtkörper. Zum Herstellen des Keramikkörpers wird die zuvor beschriebene Glaskeramikmasse verwendet. Durch den Einsatz vom bismuthaltigen Glasmaterial kann ein Dichtsintern der Glaskeramikmasse bereits unter 890°C erfolgen. Bei einem Brennvorgang in Anwesenheit von elementarem Silber kommt es nicht zu einer störenden Interdiffusion. Insbesondere kann auf diese Weise ein Keramikkörper in Form eines keramischen Mehrschichtkörpers hergestellt werden. Die Glaskeramikmasse wird insbesondere in keramischen Grünfolien in der LTCC-Technologie eingesetzt. Damit sind der LTCC-Technologie Glaskeramikmassen zur Verfügung gestellt, mit hervorragenden Materialeigenschaften für die Herstellung von mikrowellentechnischen Bauelementen.

Zusammengefasst ergeben sich mit der Erfindung folgende Vorteile:
- Die Zusammensetzung der Oxidkeramik bleibt während des Sinterns der Glaskeramikmasse im Wesentlichen konstant. Somit lassen sich die Materialeigenschaften der Glaskeramikmasse definiert voreinstellen.
- Ein nahezu komplettes Verdichten (Dichtsintern) der Glaskeramikmasse ist bei einer Temperatur von unter 910°C und sogar unter 890°C möglich.
- Durch geeignete (oxidische) Zusätze zur Oxidkeramik und zum Glasmaterial lassen sich das Sinterverhalten der Glaskeramikmasse und Materialeigenschaften der Glaskeramikmasse gezielt und nahezu beliebig einstellen. So können beispielsweise Permittivität, Güte und Tkf-Wert in einem jeweils weiten Bereich eingestellt werden unter Einhaltung einer niedrigen Dichtbrandtemperatur.
- Das Verdichten gelingt ohne Einsatz von Bleioxid und/oder Cadmiumoxid.

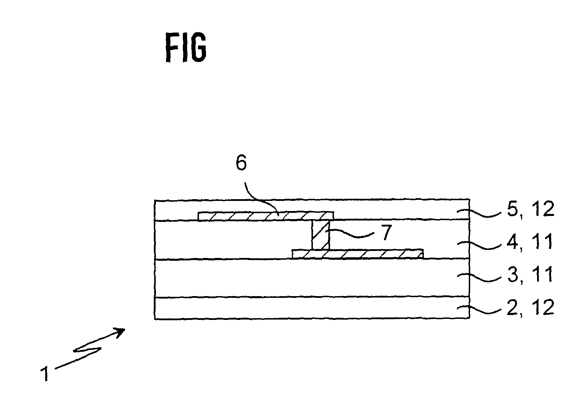

Anhand eines Ausführungsbeispiels und der dazugehörigen Figur wird die Erfindung im Folgenden beschrieben. Die Figur zeigt eine schematischen, nicht maßstabsgetreuen Querschnitt eines keramischen Körpers mit der Glaskeramikmasse in Mehrschichtbauweise.

Gemäß dem Ausführungsbeispiel ist die Glaskeramikmasse 11 ein Pulver aus einer Oxidkeramik und einem Pulver eines Glasmaterials. Die Oxidkeramik hat die formale Zusammensetzung BaRek₂Ti₄O₁₂. Das Seltenerdmetall Rek ist Neodym. Die Oxidkeramik weist als Dotierung ein zweiwertiges Metall Me2+ in Form von Zink auf. Zur Herstellung der Oxidkeramik werden entsprechende Mengen an Bariumoxid, Titandioxid und Neodymtrioxid mit etwa einem gew.% Zinkoxid vermengt, calziniert bzw. gesintert und anschließend zum entsprechenden Pulver vermahlen.

Das Glasmaterial weist Bor, Bismut, Silizium und Zink auf. Das Glasmaterial zeichnet sich durch folgende Zusammensetzung aus: 27,5 mol% Bortrioxid, 34,8 mol% Bismutoxid, 32,5 mol% Zinkoxid und 6 mol% Siliziumdioxid.

100 vol% der Glaskeramikmasse setzen sich zusammen aus 90 vol% des Keramikmaterials und 10 vol% des Glasmaterials. Keramikmaterial und Glasmaterial weisen einen D₅₀-Wert von 0,8 µm auf. Die Dichtbrandtemperatur der Glaskeramikmasse beträgt 900°C. Die Permittivität der Glaskeramikmasse beträgt 64, die Güte 820, und der Tkf-Wert 4 ppm/K.

Die vorgestellte Glaskeramikmasse 11 wird eingesetzt, um mit Hilfe der LTCC-Technologie im Volumen eines keramischen Mehrschichtkörpers 1 ein passives elektrisches Bauelement 6 und 7 zu integrieren. Der auf diese Weise hergestellte keramische Mehrschichtkörper 1 weist Keramikschichten 3 und 4 auf, die aus keramischen Grünfolien mit der Glaskeramikmasse 11 hergestellt werden. Die Keramikschichten 2 und 5 weisen eine von der Glaskeramikmasse 11 verschiedenen weitere Glaskeramikmasse 12 auf. Das elektrisch leitfähige Material der elektronischen Bauteile ist elementares Metall Me0 in Form von Silber.

## Patentansprüche

1. Glaskeramikmasse mit
- mindestens einer Oxidkeramik, die Barium, Titan und mindestens ein Seltenerdmetall Rek aufweist, und
- mindestens einem Glasmaterial, das mindestens ein Oxid mit Bor, mindestens ein Oxid mit Silizium, mindestens ein Oxid mit mindestens einem zweiwertigen Metall Me2+ und
- mindestens ein Oxid mit Bismut aufweist,
**dadurch gekennzeichnet, dass**
- ein Bleioxidanteil und/oder ein Cadmiumoxidanteil der Glaskeramikmasse und/oder der Oxidkeramik und/oder des Glasmaterials maximal 0,1 % beträgt.

2. Glaskeramikmasse nach Anspruch 1, wobei die Oxidkeramik eine formale Zusammensetzung BaRek₂Ti₄O₁₂ aufweist.

3. Glaskeramikmasse nach Anspruch 1 oder 2, wobei das Glasmaterial mindestens ein Oxid mit mindestens einem Seltenerdmetall Reg aufweist.

4. Glaskeramikmasse nach einem der Ansprüche 1 bis 3 , wobei das Seltenerdmetall Rek und/oder das Seltenerdmetall Reg aus der Gruppe Lanthan und/oder Neodym und/oder Samarium ausgewählt sind.

5. Glaskeramikmasse nach einem der Ansprüche 1 bis 4, wobei die Oxidkeramik das zweiwertige Metall Me2+ aufweist.

6. Glaskeramikmasse nach einem der Ansprüche 1 bis 5, wobei das zweiwertige Metall Me2+ aus der Gruppe Beryllium, Magnesium, Calcium, Strontium, Barium, Kupfer und/oder Zink ausgewählt ist.

7. Glaskeramikmasse nach einem der Ansprüche 1 bis 6, wobei das Glasmaterial neben dem Oxid des Siliziums als vierwertiges Metall mindestens ein Oxid mit mindestens einem weiteren vierwertigen Metall Me4+ aufweist.

8. Glaskeramikmasse nach Anspruch 7, wobei das weitere vierwertige Metall Me4+ aus der Gruppe Germanium und/oder Zinn und/oder Titan und/oder Zirkonium ausgewählt ist.

9. Glaskeramikmasse nach einem der Ansprüche 1 bis 8, wobei sich 100 vol% der Glaskeramikmasse zusammensetzen aus einem Keramikanteil der Oxidkeramik, der ausgewählt ist aus dem Bereich zwischen einschließlich 70 vol% bis einschließlich 95 vol%, und einem Glasanteil des Glasmaterials, der ausgewählt ist aus dem Bereich zwischen einschließlich 30 vol% bis einschließlich 5 vol%.

10. Glaskeramikmasse nach einem der Ansprüche 1 bis 9, wobei die Oxidkeramik und/oder das Glasmaterial ein Pulver mit einer mittlere Partikelgröße aufweisen, die aus dem Bereich zwischen einschließlich 0,1 µm und einschließlich 1,5 µm ausgewählt ist.

11. Glaskeramikmasse nach einem der Ansprüche 1 bis 10, wobei der Bleioxidanteil und/oder der Cadmiumoxidanteil maximal 1 ppm beträgt.

12. Glaskeramikmasse nach einem der Ansprüche 1 bis 11, mit einer Dichtbrandtemperatur von maximal 950°C, insbesondere von maximal 890°C.

13. Glaskeramikmasse nach Anspruch 12, mit
- einer Permittivität, die aus dem Bereich von einschließlich 20 bis einschließlich 80 ausgewählt ist,
- einer Güte, die aus dem Bereich von einschließlich 800 bis einschließlich 5000 ausgewählt ist, und
- einem Tkf-Wert, der aus dem Bereich von einschließlich - 20 ppm/K bis einschließlich + 20 ppm/K ausgewählt ist.

14. Keramikkörper mit einer Glaskeramikmasse nach einem der Ansprüche 1 bis 13.

15. Keramikkörper nach Anspruch 14, mit mindestens einem elementaren Metall Me0, das aus der Gruppe Gold und/oder Silber und/oder Kupfer ausgewählt ist.

16. Keramikkörper nach Anspruch 13 oder 14, wobei der Keramikkörper ein keramischer Mehrschichtkörper ist.

## Claims

1. Glass ceramic material comprising
- at least one oxide ceramic which contains barium, titanium and at least one rare earth metal Rek, and
- at least one glass material which contains at least one oxide of boron, at least one oxide of silicon, at least one oxide of at least one divalent metal Me2+ and
- at least one oxide of bismuth,
**characterized in that**
- a lead oxide fraction and/or a cadmium oxide fraction of the glass ceramic material and/or of the oxide ceramic and/or of the glass material is not more than 0.1%.

2. Glass ceramic material according to Claim 1, wherein the oxide ceramic has a formal composition BaRek₂Ti₄O₁₂.

3. Glass ceramic material according to Claim 1 or 2, wherein the glass material contains at least one oxide of at least one rare earth metal Reg.

4. Glass ceramic material according to any of Claims 1 to 3, wherein the rare earth metal Rek and/or the rare earth metal Reg are selected from the group consisting of lanthanum and/or neodymium and/or samarium.

5. Glass ceramic material according to any of Claims 1 to 4, wherein the oxide ceramic contains the divalent metal Me2+.

6. Glass ceramic material according to any of Claims 1 to 5, wherein the divalent metal Me2+ is selected from the group consisting of beryllium, magnesium, calcium, strontium, barium, copper and/or zinc.

7. Glass ceramic material according to any of Claims 1 to 6, wherein, in addition to the oxide of silicon as a tetravalent metal, the glass material contains at least one oxide of at least one further tetravalent metal Me4+.

8. Glass ceramic material according to Claim 7, wherein the further tetravalent metal Me4+ is selected from the group consisting of germanium and/or tin and/or titanium and/or zirconium.

9. Glass ceramic material according to any of Claims 1 to 8, wherein 100% by volume of the glass ceramic material are composed of a ceramic fraction of the oxide ceramic which is selected from the range from and including 70% by volume up to and including 95% by volume, and a glass fraction of the glass material which is selected from the range from and including 30% by volume up to and including 5% by volume.

10. Glass ceramic material according to any of Claims 1 to 9, wherein the oxide ceramic and/or the glass material comprise a powder having a mean particle size which is selected from the range from and including 0.1 µm up to and including 1.5 µm.

11. Glass ceramic material according to any of Claims 1 to 10, wherein the lead oxide fraction and/or the cadmium oxide fraction is not more than 1 ppm.

12. Glass ceramic material according to any of Claims 1 to 11, having a dense sinter temperature of not more than 950°C, in particular of not more than 890°C.

13. Glass ceramic material according to Claim 12, having
- a permittivity which is selected from the range from and including 20 up to and including 80,
- a quality which is selected from the range from and including 800 up to and including 5000, and
- a temperature variation of the frequency which is selected from the range from and including -20 ppm/K up to and including +20 ppm/K.

14. Ceramic body comprising a glass ceramic material according to any of Claims 1 to 13.

15. Ceramic body according to Claim 14, comprising at least one elemental metal Me0 which is selected from the group consisting of gold and/or silver and/or copper.

16. Ceramic body according to Claim 13 or 14, wherein the ceramic body is a ceramic multilayer body.

## Revendications

1. Masse de vitrocéramique avec
- au moins un oxyde de céramique, qui comprend au moins le baryum, le titane et au moins un métal de terre rare Rek, et
- au moins un matériau vitreux, qui comprend au moins un oxyde avec le bore, au moins un oxyde avec le silicium, au moins un oxyde avec au moins un métal bivalent Me2+ et
- au moins un oxyde avec le bismuth,
**caractérisée en ce qu'**une quantité d'oxyde de plomb et/ou une quantité d'oxyde de cadmium de la masse de vitrocéramique et/ou de l'oxyde de céramique et/ou du matériau vitreux est au maximum de 0,1 %.

2. Masse de vitrocéramique selon la revendication 1, dans laquelle l'oxyde de céramique a une composition formelle BaRek₂Ti₄O₁₂.

3. Masse de vitrocéramique selon la revendication 1 ou 2, dans laquelle le matériau vitreux comprend au moins un oxyde avec au moins un métal de terre rare Reg.

4. Masse de vitrocéramique selon l'une des revendications 1 à 3, dans laquelle le métal de terre rare Rek et/ou le métal de terre rare Reg sont du groupe du lanthane et/ou du néodyme et/ou du samarium.

5. Masse de vitrocéramique selon l'une des revendications 1 à 4, dans laquelle l'oxyde de céramique présente le métal bivalent Me2+.

6. Masse de vitrocéramique selon l'une des revendications 1 à 5, dans laquelle le métal bivalent Me2+ est choisi dans le groupe du béryllium, du magnésium, du calcium, du strontium, du baryum, du cuivre et/ou du zinc.

7. Masse de vitrocéramique selon l'une des revendications 1 à 6, dans laquelle le matériau vitreux présente en plus de l'oxyde de silicium comme métal tétravalent au moins un oxyde avec au moins un autre métal tétravalent Mₑ⁴⁺.

8. Masse de vitrocéramique selon la revendication 7, dans laquelle l'autre métal tétravalent Me4+ est choisi dans le groupe du germanium et/ou de l'étain et/ou du titane et/ou du zirconium.

9. Masse de vitrocéramique selon l'une des revendications 1 à 8, dans laquelle 100 % en volume de masse de vitrocéramique se compose d'une quantité de céramique de l'oxyde de céramique qui est choisie dans la plage entre 70 % en volume inclus à 95 % en volume inclus, et d'une quantité de verre du matériau vitreux qui est choisie dans la plage entre 30 % en volume inclus à 5 % en volume inclus.

10. Masse de vitrocéramique selon l'une des revendications 1 à 9, dans laquelle l'oxyde de céramique et/ou le matériau vitreux comprennent une poudre avec un grosseur particulaire moyenne qui est choisie dans la plage entre 0,1 µm inclus et 1,5 µm inclus.

11. Masse de vitrocéramique selon l'une des revendications 1 à 10, dans laquelle la quantité d'oxyde de plomb et/ou la quantité d'oxyde de cadmium sont au maximum de 1 ppm.

12. Masse de vitrocéramique selon l'une des revendications 1 à 11, avec une température de densification au maximum de 950 °C, en particulier au maximum de 890 °C.

13. Masse de vitrocéramique selon la revendication 12, avec une permittivité qui est choisie dans la plage de 20 inclus à 80 indus, un coefficient de qualité qui est choisi dans la plage de 800 inclus à 5000 inclus, et une valeur Tkf qui est choisie dans la plage de - 20 ppm/K inclus à + 20 ppm/K inclus.

14. Corps de céramique avec une masse de vitrocéramique selon l'une des revendications 1 à 13.

15. Corps de céramique selon la revendication 14, avec au moins un métal élémentaire Me0, qui est choisi dans le groupe de l'or et/ou de l'argent et/ou du cuivre.

16. Corps de céramique selon la revendication 13 ou 14, dans lequel le corps de céramique est un corps de céramique à plusieurs couches.
